# EUROPÄISCHE PATENTSCHRIFT

(11) **EP 0 903 473 B1**
(45) Veröffentlichungstag und Bekanntmachung des Hinweises auf die Patenterteilung: **03.03.2004**
(21) Anmeldenummer: 97810691.2
(22) Anmeldetag: 22.09.1997
(51) Int. Cl.: F01M 1/06, F16C 5/00

(54) **Dieselmotor und Verfahren zum Betreiben eines solchen**
Diesel engine and operating method therefor
Moteur diesel et méthode de fonctionnement

(43) Veröffentlichungstag der Anmeldung: 24.03.1999
(73) Patentinhaber: Wärtsilä Schweiz AG, 8401 Winterthur (CH)
(72) Erfinder: Scherrer, Hans, 8450 Andelfingen (CH); Keller, Walter, 8487 Zell (CH)
(74) Vertreter: Sulzer Management AG

(56) Entgegenhaltungen:
- EP-A- 0 340 156
- DE-A- 2 234 035
- FR-A- 1 107 223
- US-A- 1 663 528
- US-A- 3 545 569

## Beschreibung

Die Erfindung betrifft einen Dieselmotor mit einem Kreuzkopf sowie ein Verfahren zum Betreiben eines solchen Dieselmotors gemäss dem Oberbegriff des jeweiligen unabhängigen Anspruchs.

Dieselmotoren dieser Art sind häufig Grossmotoren wie sie beispielsweise als Antriebsaggregate im Schiffsbau verwendet werden. Die geradlinige Bewegung des in einem Zylinder hin- und herbewegten Kolbens wird mittels einer Kolbenstange auf einen Kreuzkopf übertragen, der seinerseits mittels einer Schubstange mit der Kurbelwelle verbunden ist. Im Betriebszustand gleitet der Kolben an der innerern Wandung des Zylinders, die meist in Form einer Zylinderlaufbuchse ausgestaltet ist, entlang. Eine wesentliche Bedeutung für die Funktionstüchtigkeit des Dieselmotors kommt dabei der Schmierung zwischen dem Kolben und der inneren Wandung des Zylinders zu. Einerseits muss der Kolben möglichst leicht, das heisst unbehindert, in dem Zylinder gleiten, andererseits muss der Kolben den Verbrennungsraum im Zylinder möglichst gut abdichten, um eine effiziente Umwandlung der beim Verbrennungsprozess freiwerdenden Energie in mechanische Arbeit zu gewährleisten.

Deshalb wird während des Betriebs des Dieselmotors üblicherweise ein Schmieröl in den Zylinder eingebracht, um gute Laufeigenschaften des Kolbens zu erzielen und den Verschleiss der Zylinderwandung, des Kolbens und der Kolbenringe möglichst gering zu halten. Ferner dient das Schmieröl der Neutralisierung agressiver Verbrennungsprodukte sowie der Vermeidung von Korrosion. Aufgrund dieser zahlreichen Anforderungen werden als Schmieröle häufig sehr hochwertige und teure Substanzen verwendet.

Bei Dieselmotoren mit Kreuzköpfen wird das Schmieröl üblicherweise über einen oder mehrere Einlässe durch die Zylinderwand in das Innere des Zylinders eingebracht. Von den Einlässen führen Leitungen zu externen Pumpen, die das Schmieröl in den Zylinder fördern. Je nach Anzahl der Zylinder sind normalerweise mehrere solcher Pumpen vorgesehen, die beispielsweise elektrisch oder hydraulisch betrieben werden. Da sich diese Pumpen üblicherweise ausserhalb des Motorengehäuses befinden, sind die Schmierölleitungen sehr lang. Dies hat den Nachteil, dass die Menge des zugeführten Schmieröls - wenn überhaupt - nur äusserst schwierig und mit hohem Aufwand kontrollierbar ist und zudem auch Variationen unterliegt. Um Motorschäden durch Mangel an Schmieröl zu vermeiden, besteht daher im allgemeinen die Tendenz, die Zylinderlaufbahn mit mehr Schmieröl zu versorgen als eigentlich benötigt wird. Das überschüssige Schmieröl wird durch die Kolbenringe abgestreift und sammelt sich am Zylinderboden, wo es durch Ablauföffnungen austreten kann. Die durch übermässiges Einbringen bedingten Verluste an hochwertigem und teurem Schmieröl stellen unter wirtschaftlichen Aspekten einen Nachteil dar.

Zudem besteht bei der Ansammlung des Schmieröls am Zylinderboden die Gefahr der Entzündung, sodass nicht gewünschte Brände im Zylinder auftreten können.

Aus der DE-A-2 234 035 ist es bekannt, zur Kühlung des Kolbens im Inneren der hohlen Kolbenstange ein Rohr vorzusehen, um ein Kühlmittel in den Kolben einzubringen. Der Kühlmittelrücklauf erfolgt durch den das Rohr umgebenden ringförmigen Kanal zu einem Ablaufrohr.

Ausgehend von diesem Stand der Technik ist es deshalb eine Aufgabe der Erfindung, einen Dieselmotor mit Kreuzkopf vorzuschlagen, der die erwähnten Nachteile nicht aufweist. Die Schmierung des Kolbens soll möglichst effizient erfolgen und der Verlust an Schmiermittel z. B. durch übermässige Mengen an eingebrachtem Schmiermittel soll möglichst gering gehalten werden. Ferner ist es eine Aufgabe der Erfindung, ein Verfahren zum Betreiben eines Dieselmotors mit Kreuzkopf bereitzustellen, dass eine möglichst effiziente und verlustfreie Schmierung des Kolbens im Zylinder ermöglicht.

Die diese Aufgaben in apparativer und verfahrenstechnischer Hinsicht lösenden Gegenstände der Erfindung sind durch die Merkmale der jeweiligen unabhängigen Ansprüche gekennzeichnet. Bei dem erfindungsgemässen Dieselmotor sind also Betätigungsmittel für die Fördervorrichtung zum Einbringen des Schmiermittels in den Zylinder vorgesehen, die so ausgebildet und angeordnet sind, dass die Fördervorrichtung durch die Bewegung des Kreuzkopfes betätigt wird.

Durch diese Massnahme wird das Einbringen des Schmiermittels in den Zylinder an die Kinematik des Kreuzkopfes gekoppelt und folglich mit dem Arbeits- oder Bewegungszyklus des Kolbens synchronisiert bzw. getaktet. Dadurch wird es ermöglicht, dass während jedem Bewegungszyklus des Kolbens im wesentlichen die gleiche Menge an Schmiermittel in den Zylinder eingebracht wird. Folglich unterliegt die pro Bewegungszyklus eingebrachte Menge an Schmiermittel praktisch keinen Variationen mehr, sodass sie sehr genau an die wiklich benötigte Menge angepasst werden kann. Durch übermässige Mengen an eingebrachtem Schmieröl bedingte Verluste lassen sich somit minimieren, und die damit verbundenen Gefahr von Bränden am Zylinderboden lässt sich deutlich reduzieren. Dies ermöglicht eine besonders effiziente und wirtschaftliche Schmierung des Kolbens.

Vorzugsweise verläuft die Zuführung für das Schmiermittel, durch welche das Schmiermittel von der Fördervorrichtung in den Zylinder einbringbar ist, im Innern der Kolbenstange und im wesentlichen in Richtung ihrer Längsachse. Durch diese Massnahme wird vermieden, dass das Schmiermittel durch die Wandung des Zylinders hindurchgeführt werden muss und beispielsweise mit dem Kühlwasser, welches den Zylinder von aussen kühlt, in Kontakt kommt, bzw. durch das Kühlwasser verunreinigt wird.

In einer bevorzugten Ausgestaltung ist die Fördervorrichtung am Kreuzkopf oder an der Kolbenstange, insbesondere an deren mit dem Kreuzkopf verbundenen Ende, befestigt. Dadurch lässt sich die Fördervorrichtung in besonders einfacher Weise durch die Bewegung des Kreuzkopfes betätigen, beispielsweise mittels eines Anschlags, der so angeordnet ist, dass die Fördervorrichtung bei der Bewegung des Kreuzkopfes derart gegen den Anschlag geführt wird, dass dieser eine Hubbewegung eines Arbeitskolbens der Fördervorrichtung bewirkt. Die Anordnung der Fördervorrichtung am Kreuzkopf oder an der Kolbenstange hat ferner den Vorteil, dass die Zuleitung von der Fördervorrichtung in den Zylinder, in welcher sich das Schmiermittel unter Förderdruck befindet, besonders kurz ist und somit hier auch praktisch keine Verluste, z. B. durch Leckage, auftreten.

Das erfindungsgemässe Verfahren zum Betreiben eines Dieselmotors mit Kreuzkopf ist dadurch gekennzeichnet, dass die Fördervorrichtung durch die Bewegung des Kreuzkopfes betätigt wird. Dies ermöglicht eine besonders effiziente und verlustarme Schmierung des Kolbens.

Weitere vorteilhafte Massnahmen und bevorzugte Ausgestaltungen des erfindungsgemässen Dieselmotors und des erfindungsgemässen Verfahrens ergeben sich aus den abhängigen Ansprüchen.

Im folgenden wird die Erfindung sowohl in Bezug auf die apparativen als auch in Bezug auf die verfahrenstechnischen Aspekte anhand von Ausführungsbeispielen und anhand der Zeichnung näher erläutert. In der Zeichnung sind identische oder von der Funktion her gleichwertige Teile mit dem gleichen Bezugszeichen versehen. In der schematischen, nicht massstäblichen Zeichnung zeigen:
- Fig. 1: eine Darstellung der wesentlichen Teile eines Dieselmotors mit Kreuzkopf,
- Fig. 2: eine Schnittdarstellung eines Ausschnitts (Kreuzkopf, Kolbenstange, Fördervorrichtung, Betätigungsmittel)eines ersten Ausführungsbeispiels des erfindungsgemässen Dieselmotors,
- Fig. 3: eine Detaildarstellung im Schnitt entlang der Linie III-III in Fig. 2,
- Fig. 4: eine Schnittdarstellung der Fördervorrichtung und der Betätigungsmittel eines zweiten Ausführungsbeispiels des erfindungsgemässen Dieselmotors,
- Fig. 5: eine Schnittdarstellung der Fördervorrichtung und der Betätigungsmittel eines dritten Ausführungsbeispiels des erfindungsgemässen Dieselmotors,
- Fig. 6: eine Schnittdarstellung der Fördervorrichtung und der Betätigungsmittel eines vierten Ausführungsbeispiels des erfindungsgemässen Dieselmotors,
- Fig. 7: eine Schnittdarstellung der Kolbenstange eines Ausführungsbeispiels des erfindungsgemässen Dieselmotors, und
- Fig. 8: eine Variante der Auflaufeinrichtung des dritten Ausführungsbeispiels.

Bei der nachstehenden Beschreibung der Erfindung werden nur die erfindungswesentlichen Aspekte bzw. Teile näher erläutert. Die übrigen Bauteile und verfahrenstechnischen Massnahmen können in an sich bekannter Weise wie bei bekannten Dieselmotoren ausgestaltet sein und werden hier nicht näher erläutert.

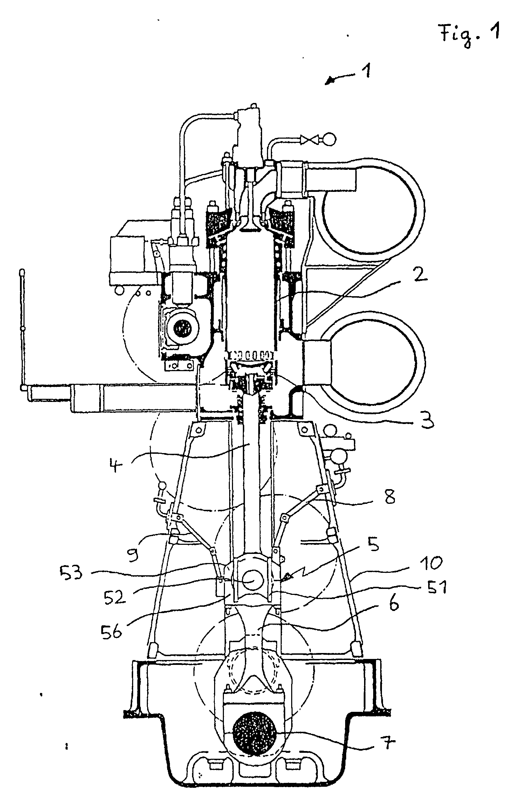

Fig. 1 zeigt in einer schematischen Darstellung wesentlichen Teile eines an sich bekannten Dieselmotors 1 mit Kreuzkopf 5. Im speziellen zeigt Fig. 1 Teile eines Grossdieselmotors mit Längsspülung, der nach dem Zweitakt-Verfahren arbeitet. Solche Dieselmotoren 1 werden beispielsweise als Antriebsaggregate im Schiffsbau verwendet. In Fig. 1 ist einer der üblicherweise mehreren Zylinder 2 zu sehen, die in einem Motorengehäuse 10 angeordnet sind. In dem Zylinder 2 ist ein Kolben 3 hin- und herbewegbar, der mittels einer Kolbenstange 4 mit einem Kreuzkopf 5 verbunden ist. Der Kreuzkopf 5 ist mittels einer Schubstange 6 mit einer Kurbelwelle 7 verbunden. Der Kreuzkopf 5 umfasst einen Lagerboden 56, der integraler Bestandteil der Schubstange 6 ist und eines ihrer Enden bildet, einen Zapfen 52, auf dem das eine Ende der Kolbenstange 4 fixiert ist und um den herum der Lagerboden 56 und damit die Schubstange 6 schwenkbar ist, einen Lagerdeckel 53, der zusammen mit dem Lagerboden 56 den Zapfen 52 umschliesst, sowie seitlich angeordnete Gleitschuhe 51 (in Fig. 1 nur einer erkennbar), mit denen der Kreuzkopf 5 beim Betrieb des Dieselmotors 1 in nicht dargestellten Gleitbahnen auf und ab - bezüglich der Darstellung in Fig. 1 - gleitet.

Ferner sind zwei Gelenkhebel 8, 9 vorgesehen, die jeweils eine gelenkige Verbindung zwischen dem Motorengehäuse 10 und dem Kreuzkopf 5 bilden. Die Gelenkhebel 8,9 haben jeweils drei Gelenke. Das eine Ende der Gelenkhebel 8,9 ist jeweils ortsfest bezüglich des Motorengehäuses 10 angeordnet und das andere Ende ortsfest bezüglich des Kreuzkopfs 5. Die Gelenkhebel 8,9 sind jeweils so ausgestaltet, dass sie der Auf- und Abbewegung des Kreuzkopfs 5 folgen können. Sie dienen im Betriebszustand der Zuführung von Schmier- bzw. Kühlmitteln. Durch das Innere des Gelenkhebels 9 wird ein Schmiermittel, beispielsweise ein Schmieröl, in das Innere des Kreuzkopfs 5 eingebracht und dient dort primär der Schmierung zwischen dem Zapfen 52 und dem Lagerboden 56. Durch das Innere des Gelenkhebels 8 wird ein Kühlmittel, beispielsweise ein Kühlöl, zugeführt und durch das Innere der Kolbenstange 4 in den Innenraum des Kolbens 3 eingebracht. Der Kolben 3 wird also im Betrieb von Innen gekühlt. Das Kühlöl wird dann durch das Innere der Kolbenstange 4 und den Zapfen 52 in an sich bekannter Weise abgeführt.

Bei solchen bekannten Dieselmotoren 1 mit Kreuzkopf 5 wird zur Kolbenschmierung, wie bereits vorne erwähnt, ein Schmieröl, welches üblicherweise ein anderes ist als das zu Kreuzkopfschmierung verwendete, von aussen durch die Wand des Zylinders 2 hindurch auf seine innere Wandung, die z. B. in Form einer Zylinderlaufbuchse ausgestaltet ist, aufgebracht. Dazu ist beispielsweise eine ausserhalb des Motorengehäuses 10 angeordnete Fördervorrichtung , z. B. eine Pumpe (in Fig. 1 nicht dargestellt), vorgesehen, die das Schmieröl über eine oder mehrere Zuführungen zu in der Wand des Zylinders 2 befindlichen Einlässen fördert, durch welche das Schmieröl auf die innere Wandung des Zylinders gelangt.

Gemäss der Erfindung wird nun vorgeschlagen, dass Betätigungsmittel für die Fördervorrichtung zum Einbringen des Schmiermittels, beispielsweise Schmieröl, in den Zylinder 2 vorgesehen sind, welche Betätigungsmittel so ausgebildet und ausgestaltet sind, dass die Fördervorrichtung durch die Bewegung des Kreuzkopfs 5 betätigt wird.

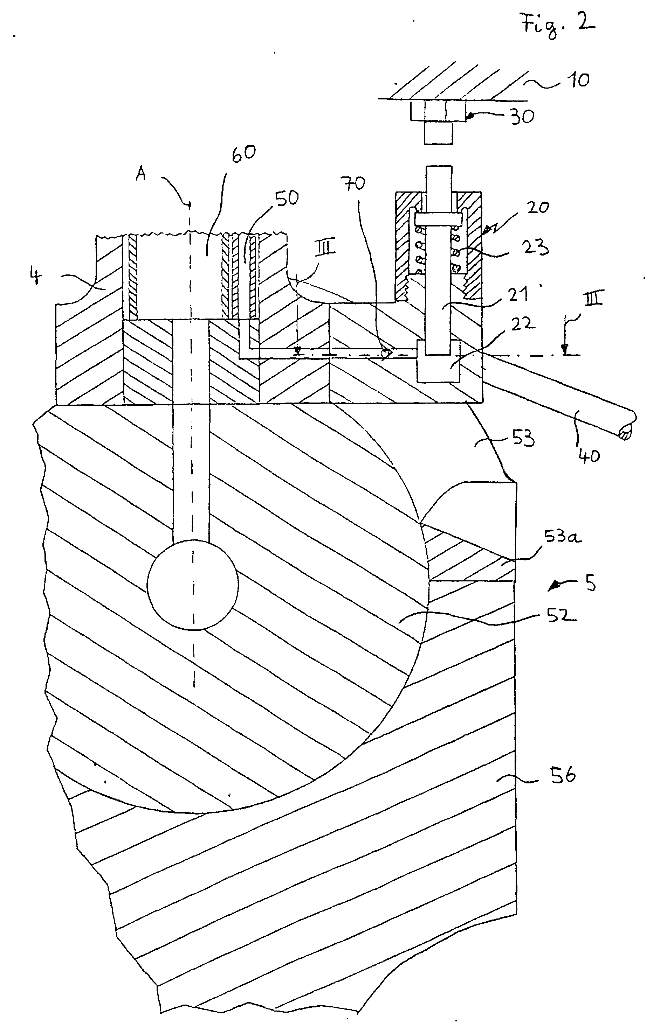

Fig. 2 zeigt in einer schematischen Schnittdarstellung einen Ausschnitt eines ersten Ausführungsbeispiels des erfindungsgemässen Dieselmotors. Bei diesem Ausführungsbeispiel umfasst die Fördervorrichtung eine Schmiermittelpumpe 20 mit einem Arbeitsraum 22 sowie mit einem Arbeitskolben 21. Der Arbeitskolben 21 kann gegen die Kraft einer Feder 23 eine Hubbewegung zur Verkleinerung des Volumens des Arbeitsraums 22 ausführen, wodurch die Pumpwirkung erzeugt wird.

Die Schmiermittelpumpe 20 ist fest an dem mit dem Kreuzkopf 5 verbundenen Ende der Kolbenstange 4 montiert. Ferner ist eine Versorgungsleitung 40 vorgesehen, welche die Schmiermittelpumpe 20 mit Schmiermittel, z. B. Schmieröl, versorgt. Das Schmieröl wird mittels einer nicht dargestellten Pumpe, beispielsweise einer Zahnradpumpe, durch die Versorgungsleitung 40 zur Niederdruckseite der Schmiermittelpumpe 20 gefördert.

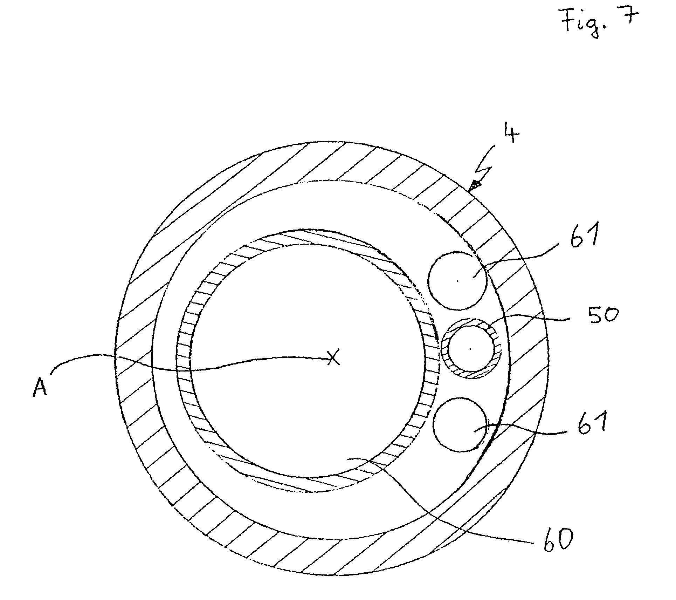

Von der Hochdruckseite der Schmiermittelpumpe 20 erstreckt sich eine Zuführung 50 (siehe auch Fig. 7) zunächst in Form eines Kanals durch das Ende der Kolbenstange 4 und dann in Form einer Rohrleitung, die im wesentlichen parallel zur Längsachse A der Kolbenstange 4 und in ihrem Innern verläuft, bis in den Innenraum des Kolbens 3. Aus dem Innenraum des Kolbens 3 führen dann Bohrungen (nicht dargestellt) nach aussen, sodass das Schmieröl durch die Zuleitung 50 und diese Bohrungen im Kolben 3 an die innere Wandung des Zylinders 2 gelangen kann. Die Bohrungen können sowohl oberhalb der Kolbenringe als auch zwischen den Kolbenringen als auch unterhalb der Kolbenringe im Kolbenhemd angeordnet sein. Ferner sind auch Ausgestaltungen möglich, bei denen die Bohrungen zu einer ringförmigen Verteilernut führen, die ähnlich ausgestaltet ist wie die Nuten, welche die Kolbenringe aufnehmen.

In der Zuführung 50 ist weiterhin ein Rückschlagventil 70 angeordnet, welches in Durchlassrichtung erst bei einem Druck öffnet, der grösser ist als der Schmieröldruck auf der Niederdruckseite der Schmiermittelpumpe 20.

Fig. 2 zeigt ferner die in der Kolbenstange verlaufende Rückführung 60 für das Kühlöl zum Kühlen des Kolbens 3.

Die Betätigungsmittel für die Schmiermittelpumpe 20 umfassen einen Anschlag 30, der ortsfest bezüglich des Motorengehäuses 10 so angeordnet ist, dass die Schmiermittelpumpe 20 bei der Bewegung des Kreuzkopfs 5 derart gegen den Anschlag 30 geführt wird, dass dieser eine Hubbewegung des Arbeitskolbens 21 der Schmiermittelpumpe 20 bewirkt.

Damit im Betriebszustand die Schmiermittelpumpe nicht durch die Schwenkbewegung des Lagerdeckels 53 mit diesem zusammenstösst, kann es eventuell nötig sein, im Lagerdeckel 53 eine Ausnehmung 53a vorzusehen, die in Fig. 2 schraffiert angedeutet ist.

Die Versorgungsleitung 40 ist bewegbar oder flexibel ausgestaltet, um der Bewegung der mit der Kolbenstange 4 fest verbundenen Schmiermittelpumpe 20 folgen zu können. Bei dem ersten Ausführungsbeispiel umfasst die Versorgungsleitung 40 einen Gelenkhebel, der analog ausgestaltet ist wie die in Fig. 1 dargestellten Gelenkhebel 8 bzw. 9.

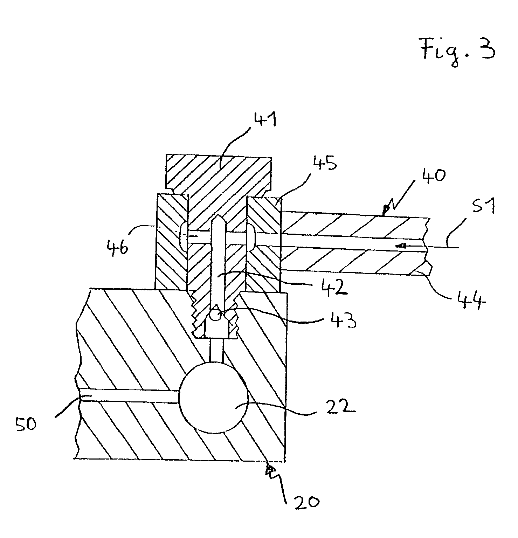

Fig. 3 verdeutlicht in einer Detaildarstellung die Verbindung zwischen der Niederdruckseite der Schmiermittelpumpe 20 und dem Ende 44 des Gelenkhebels der Versorgungsleitung 40. Fig. 3 zeigt eine Schnittdarstellung entlang der Schnittlinie III-III in Fig 2. Das Ende 44 des Gelenkhebels der Versorgungsleitung weist ein Teil 45 auf, das einen Bolzen 41 umschliesst und das um diesen Bolzen 41 schwenkbar ist. Der Bolzen 41 ist fest mit der Schmiermittelpumpe 20 verbunden, z.B. mit ihr verschraubt, und weist in seinem Innern einen Kanal 42 auf, der in den Arbeitsraum 22 der Schmiermittelpumpe 20 mündet. Das von der nicht dargestellten Zahnradpumpe geförderte Schmieröl gelangt - wie symbolisch durch den Pfeil S1 angedeutet - durch das Innere des Gelenkhebels der Versorgungsleitung 40 und durch Bohrungen 46 im Bolzen 41 in den Kanal 42 im Innern des Bolzens 41 und durch diesen Kanal 42 in den Arbeitsraum 22. In dem Kanal 42 ist ferner ein Rückschlagventil 43 vorgesehen, um ein Rückströmen des Schmieröls in die Versorgungsleitung 40 zu verhindern.

Alternativ ist es beispielsweise auch möglich, die Versorgungsleitung 40 mit einer flexiblen Schlauchverbindung, mit einer Teleskopverbindung oder mit von der Funktion her gleichwertigen Mitteln, die es ermöglichen, dass die Versorgungsleitung 40 der Bewegung des Kreuzkopfes 5 bzw. der Kolbenstange 4 folgen kann, auszugestalten.

Bewegt sich beim Betrieb des Dieselmotors 1 der Kreuzkopf 5 nach oben (gemäss der Darstellung in Fig. 2) so bewegt sich auch die Schmiermittelpumpe 20 gesamthaft nach oben. Dadurch wird der Arbeitskolben 21 der Schmiermittelpumpe 20 gegen den Anschlag 30 bewegt und führt in der Folge eine Hubbewegung aus, die das Schmieröl aus dem Arbeitsraum 22 durch die Zufürung 50 in den Kolben 3 und von dort auf die innere Wandung des Zylinders 2 fördert. Während jedem Bewegungszyklus des Kolbens 3 im Zylinder 2, der einer vollständigen Auf- und Abbewegung des Kreuzkopfs 5 (gemäss der Darstellung in Fig. 1 bzw. Fig. 2) entspricht, führt der Arbeitskolben 21 der Schmiermittelpumpe 20 eine Hubbewegung aus. Somit wird das Schmieröl stossweise in Form von "Schmierölimpulsen" und durch den Bewegungszyklus des Kolbens 3 bzw. des Kreuzkopfs 5 getaktet in den Zylinder 2 eingebracht. Das Volumen an Schmieröl, das pro Bewegungszyklus auf die innere Wandung des Zylinders 2 aufgebracht wird, ist dabei durch den Nutzhub und den Durchmesser des Arbeitskolbens 22 der Schmiermittelpumpe 20 bestimmt und für jeden Bewegungszyklus im wesentlichen gleich.

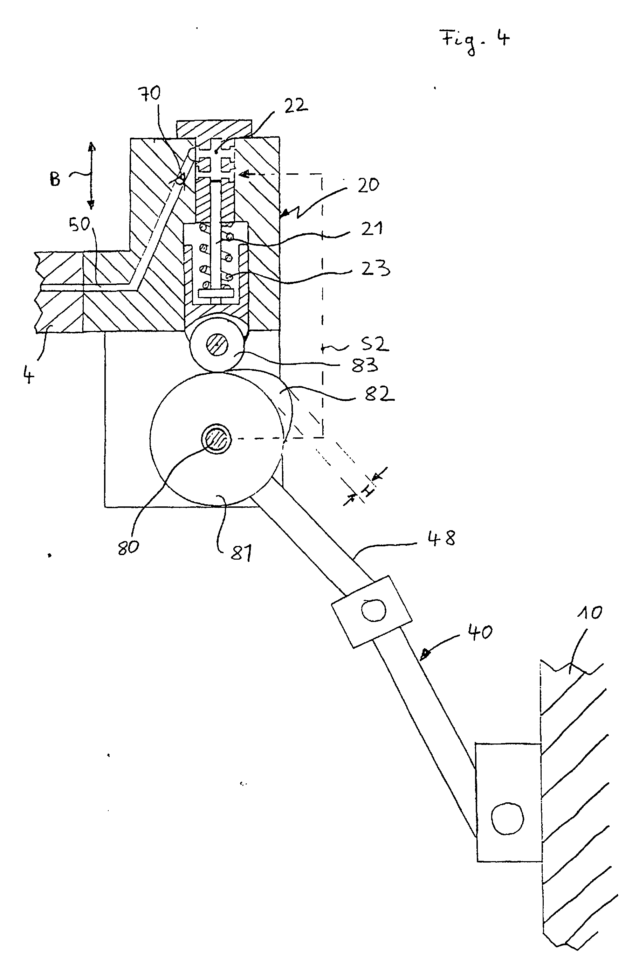

Fig. 4 zeigt in einer Schnittdarstellung die Fördervorrichtung und die Betätigungsmittel eines zweiten Ausführungsbeispiels des erfindungsgemässen Dieselmotors. Auch hier umfasst die Fördervorrichtung eine Schmiermittelpumpe 20 mit dem Arbeitskolben 21 und dem Arbeitsraum 22. Die Schmiermittelpumpe 20 ist fest mit dem am Zapfen 52 (siehe z. B. Fig. 2) des Kreuzkopfs 5 montierten Ende der Kolbenstange 4 verbunden. Im Unterschied zum ersten Ausführungsbeispiel wird die Schmiermittelpumpe 21 beim zweiten Ausführungsbeispiel mittels eines Nockenantriebs betätigt.

Die Versorgungsleitung 40 auf der Niederdruckseite der Schmiermittelpumpe 20 umfasst einen Gelenkhebel 48 durch welchen hindurch das Schmieröl von einer nicht dargestellten Pumpe, z. B. einer Zahnradpumpe zur Niederdruckseite der Schmierölpumpe 20 gefördert wird. Der Gelenkhebel 48 bildet gleichzeitig einen Teil der Betätigungsmittel für die Schmierölpumpe 20. Sein eines Ende ist bezüglich des Motorengehäuses 10 ortsfest angeordnet und sein anderes Ende ist gelenkig mit der Schmiermittelpumpe 20 verbunden, beispielsweise in sinngemäss gleicher Weise wie in Fig. 3 dargestellt. Dieses Ende des Gelenkhebels 48 ist um eine fest mit der Schmiermittelpumpe 20 verbundenen Achse 80 schwenkbar. Ebenfalls auf der Achse 80 angeordnet und drehfest mit dem schwenkbaren Ende des Gelenkhebels 48 verbunden ist eine Scheibe 81 mit einer Nocke 82, die eine Höhe H aufweist. Die Nocke 82 kann in an sich bekannter Weise über eine Nockenfolgerrolle 83 eine Hubbewegung des mit der Nockenfolgerrolle verbundenen Arbeitskolbens 21 gegen die Kraft der Feder 23 bewirken.

Das Schmieröl gelangt aus der Versorgungsleitung 40 durch die Achse 80 und einen in Fig. 4 nicht erkennbaren Kanal durch eine Einlassöffnung in den Arbeitsraum 22 wie dies der gestrichelte Pfeil S2 symbolisch andeutet.

Von der Hochdruckseite der Schmiermittelpumpe 20 erstreckt sich, sinngemäss gleich wie beim ersten Ausführungsbeispiel, die Zuführung 50 mit dem Rückschlagventil 70 durch das Innere der Kolbenstange 4 in den Kolben 3.

Im Betriebszustand bewegt sich der Kreuzkopf 5 und damit die gesamte Schmiermittelpumpe 20 auf und ab wie dies der Doppelpfeil B in Fig. 4 andeutet. Durch diese Bewegung schwenkt der Gelenkhebel 48 um die Achse 80, wodurch auch die Nocke 82 um die Achse 80 gedreht wird und über die Nockenfolgerrolle 83 den Arbeitskolben 21 verschiebt. Somit betätigt die Nocke 83 während der Bewegung des Kreuzkopfs 5 die Schmiermittelpumpe 20.

Auch bei diesem zweiten Ausführungsbeispiel führt der Arbeitskolben 21 der Schmiermittelpumpe 20 pro Bewegungszyklus des Kolbens 3 im Zylinder 2 eine Hubbewegung aus. Das Volumen an Schmieröl, das pro Schmierölimpuls auf die innere Wandung des Zylinders aufgebracht wird, ist hier im wesentlichen durch den Durchmesser des Arbeitskolbens 21 und die Höhe H der Nocke 83 bestimmt. Vorteilhaft bei dem zweiten Ausführungsbeispiel ist insbesondere, dass sehr einfach gewählt werden kann, in welchem Abschnitt des Bewegungszyklus des Kolbens 3 jeweils der Schmierölimpuls auf die Zylinderlaufbuchse aufgebracht wird. Je nachdem, wo die Nocke 82 auf der Scheibe 81 angeordnet wird, erfolgt nämlich die Kolbenschmierung z. B jeweils wenn sich der Kolben 3 im Bereich des oberen Totpunkts oder im Bereich des unteren Totpunkts oder in einem Bereich dazwischen befindet. Zudem ist die Doppelfunktion des Gelenkhebels 48, nämlich einerseits als Teil der Versorgungsleitung 40 und andererseits als Teil der Betätigungsmittel für die Schmierölpumpe 20 im Hinblick auf einen möglichst geringen apparativen Aufwand von Vorteil.

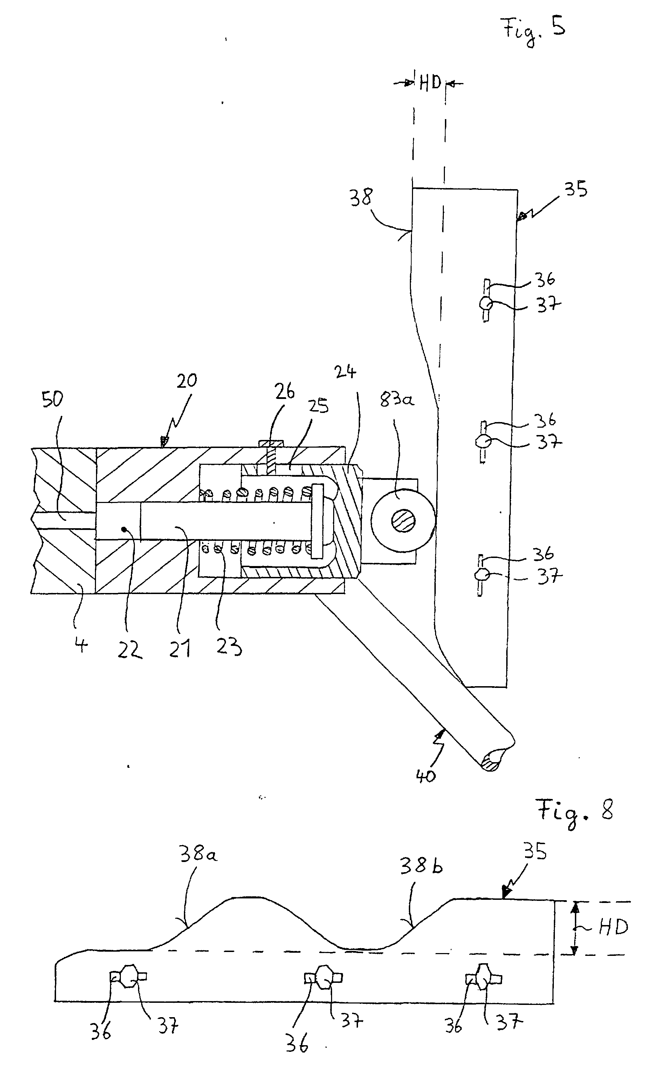

Fig. 5 zeigt eine Schnittdarstellung der Schmiermittelpumpe 20 und der Betätigungsmittel eines dritten Ausführungsbeispiels des erfindungsgemässen Dieselmotors. Auch hier ist die Schmiermittelpumpe 20 fest mit dem auf dem Zapfen 52 montierten Ende der Kolbenstange 4 verbunden. Die Versorgungsleitung 40 für das Schmieröl auf der Niederdruckseite umfasst, wie bereits vorne erläutert, wiederum einen Gelenkhebel oder eine sonstige gelenkige oder bewegliche Verbindung. Bei dem dritten Ausführungsbeispiel umfassen die Betätigungsmittel für die Schmiermittelpumpe 20 eine mit dem Arbeitskolben 21 verbundene Rolle 83a, die in Richtung der Längsachse des Arbeitskolbens 21 verschiebbar ist und mit diesem über einen Führungskolben 24 verbunden ist. Die Rolle 83a entspricht von ihrer Funktion der Nockenfolgerrolle 83 in Fig. 4.

Die Betätigungsmittel umfassen ferner eine Auflaufeinrichtung 35 mit einer rampenförmigen Fläche 38. Die Auflaufeinrichtung 35 ist bezüglich des Motorengehäuses 10 ortsfest, beispielsweise mittels Schrauben 37 an ihm befestigt, und so angeordnet, dass sich die Rolle 83a während der Bewegung des Kreuzkopfs 5 - und damit der gesamten Schmiermittelpumpe 20 - entlang der rampenförmigen Fläche 38 bewegt und dabei in Richtung der Längsachse des Arbeitskolbens 21 verschiebt, wodurch dieser eine Hubbewegung ausführt. Die Auflaufeinrichtung 35 dient somit als eine Art "lineare Nocke" (Kamme), entlang derer sich die Rolle 83a bewegt.

Der Führungskolben 24, der die Rolle 83a mit dem Arbeitskolben 21 verbindet, weist eine Führungsnut 25 auf in die ein bezüglich des Gehäuses der Schmiermittelpumpe 20 ortsfester Stift 26 eingreift. Der Stift 26 bildet zusammen mit der Nut 25 einen Anschlag, der verhindert, dass sich der Arbeitskolben 21 durch die Kraft der Feder 23 zu weit aus der Schmiermittelpumpe 20 herausbewegt, wenn die Rolle 83a über das untere Ende (bezüglich der Darstellung in Fig. 5) der Auflaufeinrichtung 35 hinausbewegt.

Bei der Auf- und Abbewegung des Kreuzkopfs 5 rollt die Rolle 83a entlang der rampenförmigen Fläche 38 und verursacht somit pro Bewegungszyklus des Kolbens 3 im Zylinder 2 eine Hubbewegung des Arbeitskolbens 21 in analoger Weise zu den vorne beschriebenen Ausführungsbeispielen.

Auch das dritte Ausführungsbeispiel weist den Vorteil auf, dass der Abschnitt des Bewegungszyklus des Kolbens 3 in welchem jeweils der Schmierölimpuls auf die Zylinderlaufbuchse aufgebracht wird, sehr einfach festgelegt werden kann, nämlich durch die Position der Auflaufeinrichtung 35. Die Schrauben 37, mit denen die Auflaufeinrichtung 35 bezüglich des Motorengehäuses 10 befestigt ist, können beispielsweise in Längsschlitzen 36 der Auflaufeinrichtung 35 geführt sein, sodass letztere in Längsrichtung der Kolbenstange 4 gesamthaft verschiebbar bzw. justierbar ist.

Die Höhendifferenz HD der Auflaufeinrichtung 35 bestimmt zusammen mit dem Durchmesser des Arbeitskolbens 21 das Volumen der pro Bewegungszyklus geförderten Schmierölmenge.

Fig. 8 zeigt noch eine Variante der Auflaufeinrichtung 35. Bei dieser Variante umfasst die Auflaufeinrichtung 35 zwei rampenförmige Flächen 38a und 38b. Bei der Auf- und Abbewegung des Kreuzkopfs 5 rollt die Rolle 83a (Fig. 5) an beiden rampenförmigen Flächen 38a, 38b entlang und verursacht somit pro Bewegungszyklus des Kolbens 3 im Zylinder 2 zwei Hubbewegungen des Arbeitskolbens 21.

Somit werden pro Bewegungszyklus zwei Schmierölimpulse eingebracht, was sich positiv auf die Schmierung auswirken kann. Natürlich können auch mehr als zwei rampenförmige Flächen 38a, 38b vorgesehen sein, falls beispielsweise mehr als zwei Schmierölimpulse pro Bewegungszyklus des Kolbens 3 erwünscht sind. Auch ist es möglich, z. B. durch unterschiedliche Höhendifferenzen HD der beiden rampenförmigen Flächen 38a und 38b, zwei unterschiedliche Volumen an Schmieröl mittels der beiden Schmierölimpulse einzubringen.

Der erfindungsgemässe Dieselmotor und das erfindungsgemässe Verfahren, bei denen die Kolbenschmierung bzw. die Betätigung der Fördervorrichtung an die Bewegung des Kreuzkopfs 5 gekoppelt und mit dieser synchronisiert ist, hat insbesondere den Vorteil, dass während jedem Bewegungszyklus des Kolbens 3 im Zylinder 2 im wesentlichen das gleiche Volumen an Schmieröl in Form eines Schmierölimpulses auf die innere Wandung des Zylinders 2 aufgebracht wird. Dadurch lässt sich das pro Bewegungszyklus eingebrachte Schmierölvolumen sehr genau an die tatsächlich für einen störungsfreien Betrieb benötigte Menge anpassen. Eine aus vorne genannten Gründen nachteilige übermässige Kolbenschmierung kann vermieden werden. Dies ist zudem vorteilhaft, weil der Verbrauch an hochwertigen und teuren Ölen zur Kolbenschmierung deutlich reduziert werden kann.

Das Volumen des pro Bewegungszyklus eingebrachten Schmieröls kann in sehr einfacher Weise eingestellt werden, nämlich über den Durchmesser des Arbeitskolbens 21 der Schmiermittelpumpe 20 und über deren Nutzhub. Ein typischer Zweitakt-Grossdieselmotor benötigt beispielsweise pro Zylinder und pro Bewegungszyklus (Umdrehung) ein Schmierölvolumen zu Kolbenschmierung von etwa 0.36 cm³. Wählt man einen Arbeitskolben 21 mit einem Durchmesser von 10 mm, so muss der Nutzhub auf etwa 0.46 mm eingestellt werden, z. B. über die Position des Anschlags 30 (Fig. 2), über die Höhe H der Nocke 82 (Fig. 4) oder über die Höhendifferenz HD der Auflaufeinrichtung 35 (Fig. 5).

Natürlich ist es auch möglich, die Schmierölmenge während des Betriebs des Dieselmotors zu verändern.

Auch ist es von Vorteil, dass in sehr einfacher Weise festgelegt werden kann, in welchem Abschnitt des Bewegungszyklus des Kolbens 3 der Schmierölimpuls auf die innere Wandung des Zylinders 2 aufgebracht wird. Bei einer Ausgestaltung gemäss Fig. 2 erfolgt der Schmierölimpuls z. B. jeweils kurz bevor der Kolben 3 den oberen Totpunkt erreicht. Natürlich ist es auch möglich das erste Ausführungsbeispiel (Fig. 2) so auszugestalten, dass der Anschlag bezüglich der Darstellung in Fig. 2 unterhalb des Arbeitskolbens 21 angeordnet ist, sodass der Schmierölimpuls jeweils kurz vor Erreichen des unteren Totpunkts erfolgt. Der Abschnitt des Bewegungszyklus des Kolbens 3, in dem der Schmierölimpuls erfolgt, lässt sich bei dem zweiten Ausführungsbeispiel (Fig. 4) sehr einfach durch die Position der Nocke 82 auf der Scheibe 81 festlegen und bei dem dritten Ausführungsbeispiel (Fig. 5) durch die Position der Auflaufeinrichtung 35 relativ zum Kreuzkopf 5.

Aus der bevorzugten Massnahme, die Zuführung 50 durch das Innere der Kolbenstange 4 zu führen, resultiert eine sehr kurze Verbindung zwischen der Hochdruckseite der Schmiermittelpumpe 20 und der inneren Wandung des Zylinders 2. Diese Massnahme bringt den Vorteil mit sich, dass das Schmieröl nicht durch die Wand des Zylinders 2 geführt werden muss, wodurch eine Verunreinigung des Schmieröls, beispielsweise durch Kühlwasser, praktisch ausgeschlossen ist.

Prinzipiell ist es bei den beschriebenen Ausführungsbeispielen auch möglich, die Schmiermittelpumpe seitlich an dem Lagerboden 56 - also an der Schubstange 6 - anzubringen. Da die Schmierölpumpe 21 dann aber ebenfalls eine Schwenkbewegung ausführt, muss die Zuführung 50 derart ausgestaltet werden, dass sie die unterschiedlichen Bewegungen, nämlich die Schwenkbewegung der Schubstange und die geradlinige Bewegung der Kolbenstange ausgleichen kann.

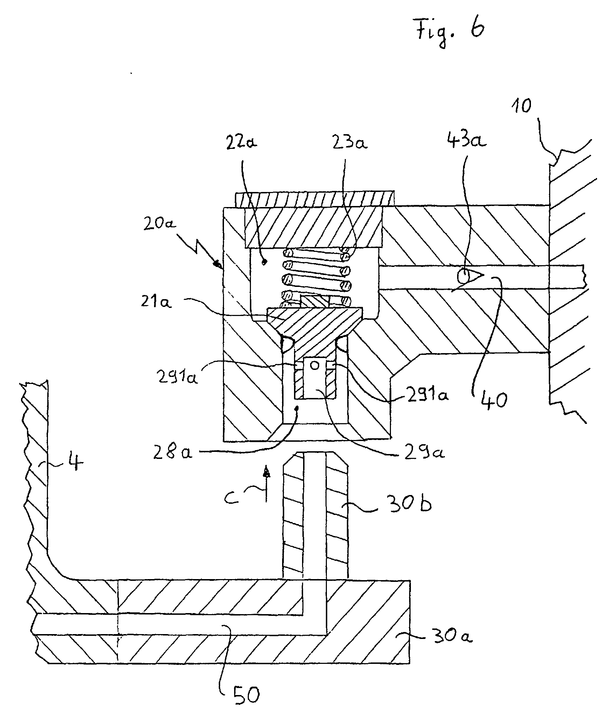

Fig. 6 zeigt eine Schnittdarstellung der Fördervorrichtung 20a und der Betätigungsmittel 30a, 30b eines vierten Ausführungsbeispiels des erfindungsgemässen Dieselmotors. Im Unterschied zu den anderen Ausführungsbeispielen ist hier die Fördervorrichtung 20a ortsfest bezüglich des Motorengehäuses 10 angeordnet und als eine Art "Zapfstelle" ausgebildet. Die Fördervorrichtung 20a hat einen Vorratsraum 22a, in den die Versorgungsleitung 40 einmündet. In der Versorgungsleitung 40 ist wiederum ein Rückschlagventil 43a vorgesehen. Der Versorgungsraum 22a hat ferner einen teilweise konisch verlaufenden Ausgang 28a, in welchem sich ein Konus 21a befindet. Der Konus 21a wird durch eine Feder 23a in den konischen Teil des Ausgangs 28a gedrückt, sodass er im geschlossenen Zustand, der in Fig. 6 dargestellt ist, den Ausgang 28a verschliesst. Der Konus 21a hat eine inneren Kanal 29a der über Bohrungen 291a mit dem Aussenraum des Konus 21a verbunden ist.

Durch eine nicht dargestellte Pumpe wird das Schmieröl durch die Versorgungsleitung 40 in den Vorratsraum 22a der Fördereinrichtung 20a gepumpt. Bei dem vierten Ausführungsbeispiel bringt diese Pumpe das Schmieröl bereits mit einem solchen Druck in den Vorratsraum 22a ein, der im wesentlichen dem Druck auf der Hochdruckseite der Schmiermittelpumpen 21 der ersten drei Ausführungsbeispiele entspricht.

Die Betätigungsmittel umfassen bei dem vierten Ausführungsbeispiel ein Verlängerungsstück 30a, das fest mit dem am Zapfen 52 montierten Ende der Kolbenstange 4 verbunden ist, sowie einen an dem Verlängerungsstück 30a angebrachten Zapfen 30b, der so ausgebildet ist, dass er in den Ausgang 28a der Fördervorrichtung 22a eindringen kann. Die Zuführung 50 erstreckt sich durch den Zapfen 30b und das Verlängerungsstück 30a in die Kolbenstange 4 und dort, wie bereits vorne erläutert, parallel zur Längsachse A (siehe Fig. 2) bis in den Kolben 3. Auch bei dem vierten Ausführungsbeispiel kann in der Zuleitung 50 ein Rückschlagventil ( in Fig. 6 nicht dargestellt) vorgesehen sein.

Bewegt sich nun im Betriebszustand des Dieselmotors der Kreuzkopf 5 nach oben (gemäss der Darstellung in Fig. 6), so bewegt sich der Zapfen 30b, wie dies der Pfeil C in Fig. 6 andeutet auf die Fördervorrichtung 20a zu, dringt in den Ausgang 28a ein und drückt in der Folge den Konus 21a gegen die Kraft der Feder 23a in den Vorratsraum 22a. Nun befindet sich der Konus 21a im geöffneten Zustand. Das Schmieröl kann über die Bohrungen 291a in den inneren Kanal 29a eindringen und gelangt von dort in die Zuführung 50, durch welche es zur inneren Wandung des Zylinders 2 gelangt. Bei der anschliessenden Abwärtsbewegung des Kreuzkopfs 5 wird der Konus 21a durch die Feder 23a wieder in seinen Sitz gedrückt, sodass der Ausgang 28a verschlossen wird.

Somit wird während der Bewegung des Kreuzkopfs 5 die Fördereinrichtung 20a betätigt und mit der Zuführung 50 für das Schmieröl verbunden. Auch bei dem vierten Ausführungsbeispiel erfolgt eine durch den Bewegungszyklus des Kolbens 3 getaktete Zuführung von Schmieröl auf die innere Wandung des Zylinders 2.

Natürlich ist auch bei dem vierten Ausführungsbeispiel eine Variante möglich, bei der die bezüglich des Motorengehäuses 10 ortsfeste Fördervorrichtung als Schmiermittelpumpe mit einem Arbeitskolben ausgestaltet ist. Der Zapfen 30b dient dann dazu, eine Hubbewegung dieses Arbeitskolbens zu verursachen, in ähnlicher Weise wie es im Zusammenhang mit den ersten drei Ausführungsbeispielen erläutert wurde.

Fig. 7 zeigt eine Querschnittdarstellung einer möglichen Ausgestaltung der Kolbenstange 4, die für alle Ausführungsbeispiele verwendet werden kann. Bei dieser Ausgestaltung ist die Rückführung 60 (siehe auch Fig. 2) für das Kühlöl exzentrisch zur Längsachse A der Kolbenstange 4 angeordnet. Neben der Rückführung 60 und achsparallel zur Längsachse A verläuft ein Rohr, das zur Zuführung 50 für das Schmieröl zur Kolbenschmierung gehört. Durch zwei Öffnungen 61 kann das Kühlöl zwischen die innere Wand der Kolbenstange 4 und die äussere Wand der Rückführung 60 eintreten und dem Innenraum des Kolbens 3 zugeführt werden. Alternativ ist es auch möglich, das Rohr der Zuführung 50 innerhalb der Rückführung 60 anzuordnen. Ferner ist es möglich, für die Zuführung 50 anstelle des Rohres eine im Querschnitt im wesentlichen U-förmige - also einseitig offene - Leitung so an der Rückführung 60 anzubringen, dass die offene Seite der Leitung durch die Wandung der Rückführung 60 abgedeckt bzw. verschlossen wird. Auch ist es möglich, ein sogenanntes Kombirohr zu verwenden, das zwei getrennte Kammern aufweist, und eine dieser Kammern für die Zuführung 50 des Schmieröls zu verwenden. Ferner ist es möglich, in der Wandung der Kolbenstange 4 eine Bohrung vorzusehen, die als Teil der Zuführung 50 dient, und durch welche das Schmieröl zur Kolbenschmierung von der Fördervorrichtung zum Kolben gelangt.

Es versteht sich, dass die zu verschiedenen Zylindern gehörenden Fördervorrichtungen entweder von einer gemeinsamen oder auch von mehreren separaten Pumpen jeweils über eine Versorgungsleitung 40 mit Schmieröl versorgt werden können. Diese Pumpe ist beispielsweise als Zahnradpumpe ausgestaltet.

Auch kann insbesondere für das Anlaufen des Dieselmotors eine zusätzliche Booster-Pumpe vorgesehen sein, die beispielsweise pneumatisch betrieben wird, und deren Funktion es ist, vor oder während des Startens des Dieselmotors die Versorgungsleitung 40, die Fördereinrichtung sowie die Zuführung 50 mit Schmieröl zu füllen.

## Patentansprüche

1. Dieselmotor mit mindestens einem Zylinder (2), in welchem ein Kolben (3) hin- und herbewegbar ist, der mittels einer Kolbenstange (4) mit einem Kreuzkopf (5) verbunden ist, welcher seinerseits mittels einer Schubstange (6) mit einer Kurbelwelle (7) verbunden ist, wobei durch das Innere der Kolbenstange (4) ein Kühlmittel in den Kolben einbringbar ist, ferner mit einer Fördervorrichtung (20;20a) zum Einbringen eines Schmiermittels in den Zylinder (2), welche Fördervorrichtung (20;20a) mit einer Versorgungsleitung (40) zur Versorgung der Fördervorrichtung (20;20a) mit Schmiermittel verbunden ist, sowie mit einer Zuführung (50), durch welche das Schmiermittel von der Fördervorrichtung (20;20a) in den Zylinder (2) einbringbar ist, **dadurch gekennzeichnet, dass** Betätigungsmittel (30;82,83;83a,35;30a,30b) für die Fördervorrichtung (20;20a) vorgesehen sind, die so ausgebildet und angeordnet sind, dass die Fördervorrichtung (20;20a) durch die Bewegung des Kreuzkopfes (5) betätigt wird, und wobei die Zuführung (50) für das Schmiermittel separat im Innern der Kolbenstange (4) verläuft, so dass das Schmiermittel getrennt vom Kühlmittel durch die Kolbenstange (4) einbringbar ist.

2. Dieselmotor nach Anspruch 1, bei welchem die Fördervorrichtung (20) am Kreuzkopf (5) oder an der Kolbenstange (4), insbesondere an deren mit dem Kreuzkopf (5) verbundenen Ende, befestigt ist.

3. Dieselmotor nach einem der vorangehenden Ansprüche, bei welchem die Fördervorrichtung eine Schmiermittelpumpe (20) mit einem Arbeitskolben (21) umfasst, und bei welchem die Betätigungsmittel (30;82,83;83a,35) für die Fördervorrichtung die Schmiermittelpumpe (20) so mit der Bewegung des Kreuzkopfes (5) koppeln, dass während jedem Bewegungszyklus des Kolbens (3) im Zylinder (2) der Arbeitskolben (21) der Schmiermittelpumpe (20) mindestens eine Hubbewegung ausführt.

4. Dieselmotor nach Anspruch 3, wobei die Betätigungsmittel für die Fördervorrichtung einen Anschlag (30) umfassen, der so angeordnet ist, dass die Schmiermittelpumpe (20) bei der Bewegung des Kreuzkopfs (5) derart gegen den Anschlag (30) geführt wird, dass dieser eine Hubbewegung des Arbeitskolbens (21) der Schmiermittelpumpe (20) bewirkt.

5. Dieselmotor nach einem der Ansprüche 1-3, bei welchem die Betätigungsmittel für die Fördervorrichtung (20) einen Gelenkhebel (48) umfassen, dessen eines Ende bezüglich des Motorengehäuses (10) ortsfest angeordnet ist, und dessen anderes Ende gelenkig mit der Fördervorrichtung (20) verbunden ist, wobei an dem mit der Fördervorrichtung (20) verbundenen Ende des Gelenkhebels (48) eine Nocke (82) so angeordnet ist, dass sie während der Bewegung des Kreuzkopfes (5) die Fördervorrichtung (20) betätigt.

6. Dieselmotor nach Anspruch 3, wobei die Betätigungsmittel eine mit dem Arbeitskolben (21) der Schmiermittelpumpe (20) verbundene Rolle (83a) umfassen, die in Richtung der Längsachse des Arbeitskolbens (21) verschiebbar ist, sowie eine Auflaufeinrichtung (35) mit einer rampenförmigen Fläche (38), die bezüglich des Motorengehäuses (10) ortsfest ist und so angeordnet ist, dass sich die Rolle (83a) während der Bewegung des Kreuzkopfes (5) entlang der rampenförmigen Fläche (38) bewegt und dabei in Richtung der Längsachse des Arbeitskolbens (21) verschoben wird.

7. Dieselmotor nach Anspruch 6, wobei die Auflaufeinrichtung (35) mindestens zwei rampenförmige Flächen (38a,38b) umfasst.

8. Dieselmotor nach Anspruch 1, wobei die Fördervorrichtung (20a) ortsfest bezüglich des Motorengehäuses (10) angeordnet ist, und wobei die Betätigungsmittel (30a,30b) so ausgebildet und an der Kolbenstange (4) oder am Kreuzkopf (5) angeordnet sind, dass sie während der Bewegung des Kreuzkopfes (5) die Fördereinrichtung (20a) betätigen und mit der Zuführung (50) für das Schmiermittel verbinden.

9. Verfahren zum Betreiben eines Dieselmotors mit mindestens einem Zylinder (2) , in welchem ein Kolben (3) hin- und herbewegbar ist, der mittels einer Kolbenstange (4) mit einem Kreuzkopf (5) verbunden ist, welcher seinerseits mittels einer Schubstange (6) mit einer Kurbelwelle (7) verbunden ist, wobei durch das Innere der Kolbenstange (4) ein Kühlmittel in den Kolben eingebracht wird, bei welchem Verfahren mittels einer Fördervorrichtung (20;20a) ein Schmiermittel in den Zylinder (2) eingebracht wird, **dadurch gekennzeichnet, dass** die Fördervorrichtung (20;20a) durch die Bewegung des Kreuzkopfes (5) betätigt wird, und dass das Schmiermittel separat vom Kühlmittel durch das Innere der Kolbenstange (4) in den Zylinder (2) eingebracht wird.

10. Verfahren nach Anspruch 9, wobei das Schmiermittel stossweise und durch den Bewegungszyklus des Kolbens (3) getaktet in den Zylinder (2) eingebracht wird.

## Claims

1. Diesel engine comprising at least one cylinder (2) in which a piston (3) can be moved back and forth, this piston being connected by means of a piston rod (4) to a crosshead (5), which in turn is connected to a crankshaft (7) by means of a thrust rod (6), with a coolant being introducible into the piston through the interior of the piston rod (4) and also comprising a forwarding apparatus (20; 20a) for the introduction of a lubricant into the cylinder (2), said forwarding apparatus (20; 20a) being connected to a supply line (40) for supplying the forwarding apparatus (20; 20a) with lubricant, as well as to a feed (50) through which the lubricant can be introduced into the cylinder (2) by the forwarding apparatus (20; 20a), **characterised in that** actuation means (30; 82, 83; 83a, 35; 30a, 30b) are provided for the forwarding apparatus (20; 20a) and are designed and arranged in such a manner that the forwarding apparatus (20; 20a) is actuated by the movement of the crosshead (5) and wherein the feed (50) for the lubricant extends separately in the interior of the piston rod, so that the lubricant can be introduced through the piston rod (4) separately from the coolant.

2. Diesel engine in accordance with claim 1 in which the forwarding apparatus (20) is mounted on the crosshead (5) or on the piston rod (4), in particular at its end which is connected to the crosshead (5).

3. Diesel engine in accordance with one of the preceding claims in which the forwarding apparatus comprises a lubricant pump (20) with a working piston (21) and in which the actuation means (30; 82, 83; 83a, 35) for the forwarding apparatus couple the lubricant pump (20) to the movement of the crosshead (5) in such a manner that the working piston (21) of the lubricant pump (20) executes at least one stroke movement during each cycle of movement of the piston (3) in the cylinder (2).

4. Diesel engine in accordance with claim 3, with the actuation means for the forwarding apparatus comprising an abutment (30) which is arranged in such a manner that the lubricant pump (20) is guided against the abutment (30) during the movement of the crosshead (5) in such a manner that the abutment effects a stroke movement of the working piston (21) of the lubricant pump (20).

5. Diesel engine in accordance with one of the claims 1 to 3 in which the actuation means for the forwarding apparatus (20) comprise an articulated lever (48), of which the one end is arranged to be of fixed location with respect to the engine housing (10) and of which the other end is pivotally connected to the forwarding apparatus (20), with a cam (82) being arranged at the end of the articulated lever (48) which is connected to the forwarding apparatus (20) in such a manner that it actuates the forwarding apparatus (20) during the movement of the crosshead (5).

6. Diesel engine in accordance with claim 3, with the actuation means comprising a roller (83a) which is connected to the working piston (21) of the lubricant pump (20) and can be displaced in the direction of the longitudinal axis of the working piston (21) as well as a run-up device (35) with a ramp-like surface (38) which is of fixed location with respect to the engine housing (10) and is arranged in such a manner that the roller (83a) moves along the ramp-like surface (38) during the movement of the crosshead (5) and is displaced in the direction of the longitudinal axis of the working piston (21).

7. Diesel engine in accordance with claim 6, with the run-up device (35) comprising at least two ramp-like surfaces (38a, 38b).

8. Diesel engine in accordance with claim 1, with the forwarding apparatus (20a) being arranged to be of fixed location with respect to the engine housing (10) and with the actuation means (30a, 30b) being designed and arranged at the piston rod (4), or at the crosshead (5), in such a manner that they actuate the forwarding apparatus (20a) and connect it to the feed (50) for the lubricating oil during the movement of the crosshead (5).

9. Method for the operation of a diesel engine with at least one cylinder (2) in which a piston (3) can be moved back and forth, the piston being connected by means of a piston rod (4) to a crosshead (5), which in turn is connected by means of a thrust rod (6) to a crankshaft (7), with a coolant being introduced into the piston through the interior of the piston rod (4), in which method a lubricant is introduced into the cylinder (2) by means of a forwarding apparatus (20; 20a), **characterised in that** the forwarding apparatus (20; 20a) is actuated by the movement of the crosshead (5) and **in that** the lubricant is introduced into the cylinder (2) separate from the coolant through the interior of the piston rod (4).

10. Method in accordance with claim 9, with the lubricant being introduced pulse-wise into the cylinder (2) through the interior of the piston rod (4) and cyclically through the cycle of movement of the piston.

## Revendications

1. Moteur diesel avec au moins un cylindre (2) dans lequel peut être déplacé dans un sens et dans l'autre un piston (3), qui est relié à l'aide d'une bielle (4) avec une crosse de piston (5), qui est de son côté reliée à l'aide d'une tige de poussée (6) avec un vilebrequin (7), un agent réfrigérant pouvant être introduit dans le piston par l'intérieur de la bielle (4), par ailleurs avec un dispositif de mise en circulation (20 ; 20a) pour l'introduction d'un lubrifiant dans le cylindre (2), lequel dispositif de mise en circulation (20 ; 20a) est relié avec une conduite d'alimentation (40) pour alimenter ce dispositif de mise en circulation (20 ; 20a) en huile de lubrification, ainsi qu'avec une conduite d'apport (50) à travers laquelle le lubrifiant peut être amené depuis le dispositif de mise en circulation (20 ; 20a) jusque dans le cylindre (2), **caractérisé en ce que** pour le dispositif de mise en circulation (20 ; 20a) sont prévus des moyens d'actionnement (30 ; 82, 83 ; 83a, 35 ; 30a, 30b), qui sont conçus et disposés de telle manière que le dispositif de mise en circulation (20 ; 20a) soit actionné par le mouvement de la crosse de piston (5), la conduite d'apport (50) pour le lubrifiant s'étendant séparément à l'intérieur de la bielle (4), de sorte que le lubrifiant peut être introduit séparément de l'agent réfrigérant à travers la bielle (4).

2. Moteur diesel selon la revendication 1, **caractérisé en ce que** le dispositif de mise en circulation (20) est fixé sur la crosse de piston (5) ou sur la bielle (4), en particulier sur son extrémité reliée à la crosse de piston (5).

3. Moteur diesel selon l'une des revendications précédentes, **caractérisé en ce que** le dispositif de mise en circulation comprend une pompe à lubrifiant (20) avec un piston de travail (21) et **en ce que** les moyens d'actionnement (30 ; 82, 83 ; 83a, 35) pour le dispositif de mise en circulation assurent un couplage tel de la pompe à lubrifiant (20) avec le mouvement de la crosse de piston (5) que, lors de chaque cycle de déplacement du piston (3) dans le cylindre (2), le piston de travail (21) de la pompe à lubrifiant (20) effectue au moins un mouvement de course.

4. Moteur diesel selon la revendication 3, **caractérisé en ce que** les moyens d'actionnement pour le dispositif de mise en circulation comprennent une butée (30), qui est disposée de telle manière que, lors du mouvement de la crosse de piston (5), la pompe à lubrifiant (20) est dirigée de telle manière contre la butée (30) que celle-ci provoque un mouvement de course du piston de travail (21) de la pompe à lubrifiant (20).

5. Moteur diesel selon l'une des revendications 1-3, **caractérisé en ce que** les moyens d'actionnement pour le dispositif de mise en circulation (20) comprennent un levier articulé (48), dont l'une des extrémités est disposée à poste fixe par rapport au carter (10) du moteur et dont l'autre extrémité est reliée de manière articulée avec le dispositif de mise en circulation (20), une came (82) étant disposée de telle manière sur l'extrémité du levier articulé (48) reliée avec le dispositif de mise en circulation (20) que, lors du mouvement de la crosse de piston (5), elle actionne le dispositif de mise en circulation (20).

6. Moteur diesel selon la revendication 3, **caractérisé en ce que** les moyens d'actionnement comprennent un rouleau (83a) relié avec le piston de travail (21) de la pompe à lubrifiant (20) et qui peut être déplacé en direction de l'axe longitudinal du piston de travail (21) ainsi qu'un dispositif à plan incliné (35) avec une surface en forme de rampe (38), qui est placé à poste fixe par rapport au carter (10) du moteur et qui est disposé de telle manière que, lors du déplacement de la crosse de piston (5), le rouleau (83a) se déplace le long de la surface en forme de rampe (38) en étant ainsi décalé en direction de l'axe longitudinal du piston de travail (21).

7. Moteur diesel selon la revendication 6, **caractérisé en ce que** le dispositif à plan incliné (35) comprend au moins deux surfaces en forme de rampes (38a, 38b).

8. Moteur diesel selon la revendication 1, **caractérisé en ce que** le dispositif de mise en circulation (20a) est disposé à poste fixe par rapport au carter (10) du moteur et **en ce que** les moyens d'actionnement (30a, 30b) sont conçus et sont disposés sur la bielle (4) ou sur la crosse de piston (5) de telle manière que, lors du mouvement de la crosse de piston (5), ils actionnent le dispositif de mise en circulation (20a) et le relient avec la conduite d'apport (50) pour le lubrifiant.

9. Méthode pour utiliser un moteur diesel avec au moins un cylindre (2) dans lequel peut être déplacé dans un sens et dans l'autre un piston (3), qui est relié à l'aide d'une bielle (4) avec une crosse de piston (5), qui est de son côté reliée à l'aide d'une tige de poussée (6) avec un vilebrequin (7), un agent réfrigérant étant introduit dans le piston par l'intérieur de la bielle (4), et la méthode consistant à introduire un lubrifiant dans le cylindre (2) à l'aide d'un dispositif de mise en circulation (20 ; 20a), **caractérisée en ce que** le dispositif de mise en circulation (20 ; 20a) est actionné par le mouvement de la crosse de piston (5) et **en ce que** le lubrifiant est introduit séparément de l'agent réfrigérant dans le cylindre (2) à travers l'intérieur de la bielle (4).

10. Méthode selon la revendication 9, **caractérisée en ce que** le lubrifiant est introduit par à-coups dans le cylindre (2) selon un cadencement imposé par le cycle de déplacement du piston (3).
